# EUROPÄISCHE PATENTANMELDUNG

(11) **EP 2 570 621 A1**
(43) Veröffentlichungstag der Anmeldung: **20.03.2013**
(21) Anmeldenummer: 11181387.9
(22) Anmeldetag: 15.09.2011
(51) Int. Cl.: F01D 25/28, B25H 1/18, F16M 11/10

(54) **Vorrichtung zum Schwenken eines Rotors einer Strömungsmaschine aus einer ersten Lage in eine zweite Lage**

(71) Anmelder: Siemens Aktiengesellschaft, 80333 München (DE)
(72) Erfinder: Foerster, Carsten, 45131 Essen (DE); Hülfenhaus, Armin, 40764 Langenfeld (DE)

(57) **Zusammenfassung**

Die Erfindung betrifft eine Vorrichtung (12) zum Schwenken eines Rotors (10) einer Strömungsmaschine aus einer ersten - vorzugsweise horizontalen - Lage (10a) in eine zweite - vorzugsweise senkrechte - Lage (10c), wobei der Rotor (10) mehrere Rotorscheiben umfasst, die von mindestens einem Zuganker miteinander verspannt sind, umfassend zwei parallel zueinander angeordnete Wangenelemente (24), ein diese Wangenelemente (24) miteinander verbindendes Brückenelement (28) und einen teilbaren Wendering (30) zur formschlüssigen Aufnahme eines axialen Abschnitts des aufzustellenden Rotors (10) und zwei am Wendering (30) fluchtend angeordnete, in den Wangenelementen (24) drehbar gelagerte Zapfen (32) zum Schwenken des Wenderings (30) um eine zur Horizontalebene parallele Schwenkachse (31). Um eine besonders sichere Befestigung des senkrecht aufgestellten Rotors (10) zu erreichen, wird vorgeschlagen, dass im Brückenelement (28) eine zur Horizontalebene (18) senkrecht verfahrbare Scheibe (42) zur flanschartigen Verschraubung mit einem von der Vorrichtung (12) gehaltenen senkrecht aufgestellten Rotor (10) gelagert ist.

## Beschreibung

Die Erfindung betrifft eine Vorrichtung zum Schwenken eines Rotors einer Strömungsmaschine aus einer ersten, beispielsweise horizontalen Lage in eine zweite, beispielsweise senkrechte Lage, wobei der Rotor mehrere Rotorscheiben umfasst, die von mindestens einem Zuganker miteinander verspannt sind.

Eine derartige Vorrichtung ist beispielsweise aus der WO 2008/125507 A2 bekannt. Die darin als Wendebock bezeichnete Vorrichtung ist mit zwei weiteren Lagerblöcken entlang einer Geraden fluchtend aufgestellt. Auf den beiden Lagerböcken kann der Rotor einer Gasturbine abgelegt werden, dessen am verdichterseitigen Ende angeordneter Flansch dann mit dem Wendebock verbunden werden kann. Dazu weist der Wendebock an seiner Spitze ein Gelenk auf, dessen Drehachse parallel zur Horizontalebene verläuft. Gleichzeitig umfasst das Gelenk eine wälzgelagerte Aufnahme für einen drehbaren Drehteller. Nach der Befestigung des Flansches am Drehteller kann das turbinenseitige Ende mit Hilfe eines Krans angehoben werden. Währenddessen wird der Rotor um die Drehachse des Gelenks geschwenkt und somit aus seiner horizontalen Lage in eine vertikale Lage gebracht. Dies wird auch als Aufrichten des Rotors bezeichnet. Anschließend wird der Rotor mittels einer als Gerüst ausgestalteten Sicherungsvorrichtung gegen Umkippen gesichert. Dabei erfolgt die Sicherung des Rotors gegen Umkippen auf einer vergleichsweise großen Höhe, weit oberhalb der Drehachse des Gelenks.

Die aus dem Stand der Technik bekannte Konstruktion ist vergleichsweise großbauend und verursacht damit sowohl bei der Herstellung als auch während des Transports höhere Kosten. Aufgabe der Erfindung ist daher die Bereitstellung einer Vorrichtung zum Aufstellen eines Rotors einer Strömungsmaschine, welche einerseits besonders kleinbauend und kompakt ausgestaltet ist. Weiter sollte die Vorrichtung erdbebensicher sein und auch auf freiem Gelände verwendet werden können. Dazu muss die Vorrichtung geeignet sein, die aufgrund von Windkräften und Windlasten auf den Rotor einwirkenden Kräfte sicher abzufangen.

Die der Erfindung zugrundeliegende Aufgabe wird mit einer Vorrichtung gemäß den Merkmalen des Anspruchs 1 gelöst.

Erfindungsgemäß ist vorgesehen, dass die Vorrichtung zwei parallel zueinander angeordnete Wangenelemente, ein diese Wangenelemente miteinander verbindendes Brückenelement, einen teilbaren Wendering zur formschlüssigen Aufnahme eines axialen Abschnitts des aufzustellenden Rotors und zwei am Wendering fluchtend angeordnete, in den Wangenelementen drehbar gelagerte Zapfen zum Schwenken des Wenderings um eine zur Horizontalebene parallele Schwenkachse umfasst, wobei im Brückenelement eine zur Horizontalebene senkrecht verfahrbare Scheibe zur flanschartigen Verschraubung mit einem von der Vorrichtung gehaltenen, senkrecht aufgestellten Rotor gelagert ist.

Die Erfindung wendet sich somit vom Stand der Technik ab, bei dem die Gewichtskraft des Rotors und die beim drohenden Umkippen des Rotors auftretenden Querkräfte von zwei getrennten Konstruktionen abgetragen werden müssen. Die Erfinder haben erkannt, dass eine kompakte und somit kleinbauende Vorrichtung zum Halten und zum Sichern des Rotors gegen Umkippen auch erreicht werden kann, wenn einerseits die Gewichtskraft des Rotors von einem Wendering und über dessen Zapfen auf zwei parallel zueinander angeordnete Wangenelemente eingeleitet wird und der Rotor nicht oberhalb dieses Wenderings, sondern unterhalb - d.h. zwischen Wendering und Fundament - durch eine im Brückenelement gelagerte, zur Horizontalebene senkrecht verfahrbare Scheibe gegen Umkippen gesichert werden kann.

Folglich wird nach dem Aufstellen des Rotors in eine senkrechte Lage mit Hilfe des Krans die im Brückenelement vorgesehene Scheibe aus ihrer unteren Parkposition bewegt, bis sie an dem verdichterseitigen Ende des Rotors anliegt. Danach lässt sich die Scheibe mit dem am verdichterseitigen Ende des Rotors angeordneten Flansch verschrauben, so dass der Rotor anschließend gegen Umkippen gesichert ist. Selbstverständlich kann vorgesehen sein, dass ein signifikanter Anteil der Gewichtskraft nicht nur über den Wendering und die Zapfen in die Wangenelemente und weiter in das Fundament abgeleitet wird, sondern auch über die verfahrbare Scheibe und das Brückenelement, welches die beiden Wangenelemente miteinander verbindet. Mit Hilfe der vorgenannten Vorrichtung ist es möglich, dass diese einerseits kleinbauend und somit kostengünstig hergestellt und transportiert werden kann. Weiterhin hat sich gezeigt, dass aufgrund der gewählten Konstruktion eine Abtragung von Sonderlasten wie beispielsweise Windlasten oder Erdbebenlasten zuverlässig gewährleistet werden kann.

Weitere vorteilhafte Ausgestaltungen der Vorrichtung sind in den jeweiligen Unteransprüchen angeben. Soweit nichts anderes angegeben ist, sind die Merkmale unterschiedlicher Unteransprüche in beliebiger Weise miteinander kombinierbar.

Gemäß einer ersten vorteilhaften Ausgestaltung ist die Scheibe um die Verfahrrichtung schwenkbar. Dies ermöglicht eine einfache Ausrichtung der in der Scheibe angeordneten Gewinde gegenüber denjenigen Öffnungen, die am verdichterseitigen Flansch vorgesehen sind. Hierdurch lassen sich die Gewinde der Scheibe und den Öffnungen des Gasturbinenrotorflansches besonders einfach in Überdeckung bringen, so dass mit einfachen Mitteln vergleichsweise schnell die Scheibe mit dem Rotor verschraubt werden kann.

Besonders vorteilhaft ist diejenige Ausgestaltung, bei der die Scheibe hydraulisch angehoben und abgesenkt werden kann. Hierdurch kann die Scheibe auch mit einer vorbestimmten Kraft an den verdichterseitigen Flansch des Rotors angepresst werden, was einen tragenden Kontakt zum Rotor herstellt.

Weiter bevorzugt weist der Wendering eine Abdeckung auf. Mit Hilfe dieser Abdeckung ist es möglich, einen am axialen Abschnitt des Rotors angeordneten Wellenbund formschlüssig im Wendering zu fixieren, so dass der Rotor gegen eine axiale Verschiebung innerhalb des Wenderings entlang beider Richtungen gesichert ist. Eine ungewollte und plötzlich auftretende Verschiebung während des Aufrichtens kann somit sicher vermieden werden.

Gemäß einer weiteren vorteilhaften Weiterbildung ist an jedem Wangenelement jeweils ein Riegel angelenkt, welcher an dem jeweils anderen Wangenelement verriegelbar oder verschraubbar ist. Mit Hilfe der beiden Riegel werden die ohnehin über das Brückenelement miteinander gekoppelten Wangenelemente erneut miteinander verbunden, so dass die Vorrichtung mit geschlossenen Riegeln dadurch insgesamt weiter versteift wird. Die höhere Steifigkeit führte zu einer gesteigerten Windlasten-und Erdbebenlastensicherheit.

Die vorgenannte Ausgestaltung lässt sich vorteilhafterweise weiterbilden, wenn an jedem Riegel ein Klemmschuh zum Einspannen des Rotorflansches vorgesehen ist. Mit Hilfe dieser Maßnahme wird an einer weiteren Stelle der Rotor gegen Umfallen gesichert, was dazu führt, dass die Vorrichtung selber den Rotor erneut gegen Umfallen sichert. Diese Maßnahme steigert die Erdbebensicherheit und Windlastbeständigkeit weiter.

Um eine besonders einfache und zuverlässig befestigbare Vorrichtung anzugeben, sind die beiden Wangenelemente über eine metallische Bodenplatte mit einem erdbebenfesten Fundament fest verschraubbar.

Weitere Vorteile und Merkmale der Erfindung werden anhand eines Ausführungsbeispiels näher erläutert. Das Ausführungsbeispiel ist dabei in den einzelnen Figuren der Zeichnung dargestellt. Es zeigen:
- FIG 1: in schematischer Darstellung das Aufrichten eines Rotors einer Strömungsmaschine aus einer horizontalen Lage in eine senkrechte Lage mit Hilfe einer Vorrichtung zum Aufrichten des Rotors,
- FIG 2: in perspektivischer Ansicht die schematisch dargestellte Vorrichtung,
- FIG 3: die in FIG 2 dargestellte Vorrichtung in einer teilgeschnittenen Seitenansicht und
- FIG 4: die Vorrichtung in einer weiteren Seitenansicht mit aufgeklappten Riegeln.

In allen Figuren sind identische Bauteile mit gleichen Bezugszeichen versehen.

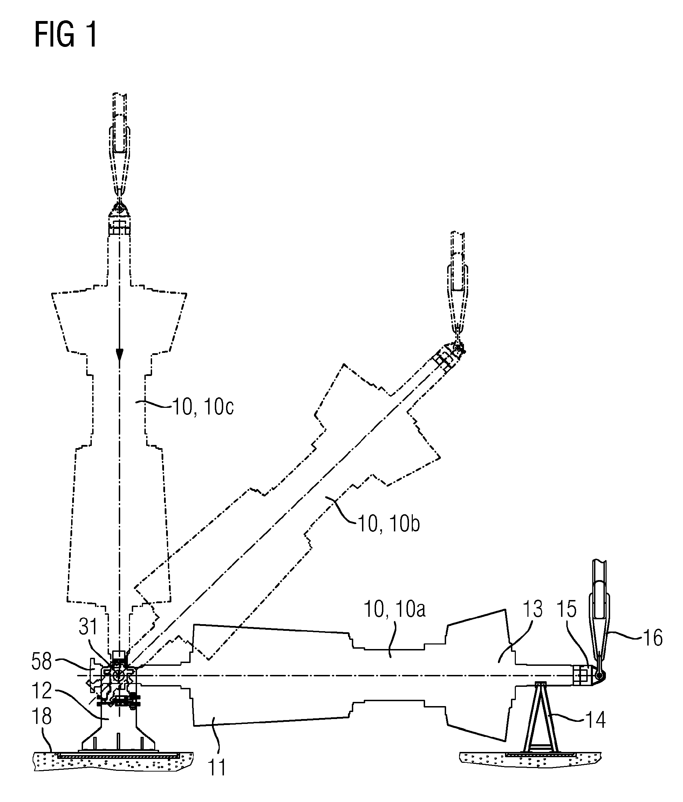

Die FIG 1 zeigt schematisch das Aufrichten eines Rotors 10 einer Strömungsmaschine aus einer horizontalen Lage in eine senkrechte Lage. Der Rotor 10 kann dabei in beliebiger Weise ausgestaltet sein. Vorzugsweise ist der Rotor 10 jedoch als sog. Scheibenrotor ausgebildet, welcher mehrere axial aneinanderliegende Rotorscheiben umfasst, die von mindestens einem im Detail nicht weiter dargestellten Zuganker miteinander verspannt sind. Der Rotor 10 ist in drei unterschiedlichen Positionen dargestellt. In der ersten Position befindet sich der Rotor 10 in der horizontalen Lage 10a. Dabei liegt der Rotor 10 mit seinem verdichterseitigen Ende 11 auf einer Vorrichtung 12, die auch als Wendebock bezeichnet wird. Das verdichterseitige Ende 11 des Rotors 10 ist in der Vorrichtung 12 schwenkbar angeordnet. Das turbinenseitige Ende 13 des Rotors 10 ist auf einem einfach gestalteten Rollenbock 14 abgelegt. Am turbinenseitigen Ende 13 des Rotors 10 ist eine Mutter 15 aufgeschraubt. An der Mutter 15 ist ein Haken 16 eines Krans befestigt. Durch Anheben des Rotors 10 mit Hilfe des Krans wird dieser aus der ersten Lage 10a über eine Zwischenlage 10b in eine zweite, zur Horizontalebene senkrechte Lage 10c aufgerichtet. Währenddessen schwenkt der Rotor 10 um eine zur Horizontalebene 18 parallele Schwenkachse 31. Nach dem Aufrichten des Rotors 10 wird dieser in der Vorrichtung 12 gegen Umkippen gesichert, was im Detail in den nachfolgenden Figuren näher beschrieben wird. Anschließend kann der Haken 16 von der auf dem Zuganker aufgeschraubten Mutter 15 entfernt werden, so dass das turbinenseitige Ende 13 des Rotors 10 freiendend nach oben steht. In dieser Lage 10c sind Wartungsarbeiten am Rotor 10 durchführbar. Beispielsweise kann der Rotor 10 in seine einzelnen Bestandteile zerlegt werden. Selbstverständlich ist das Verfahren und die Vorrichtung 12 auch dafür vorgesehen, lediglich den Zuganker des Rotors 10 aus einer horizontalen Lage 10a in eine senkrechte Lage 10c aufzurichten, um diesen anschließend mit den Rotorscheiben bestücken zu können.

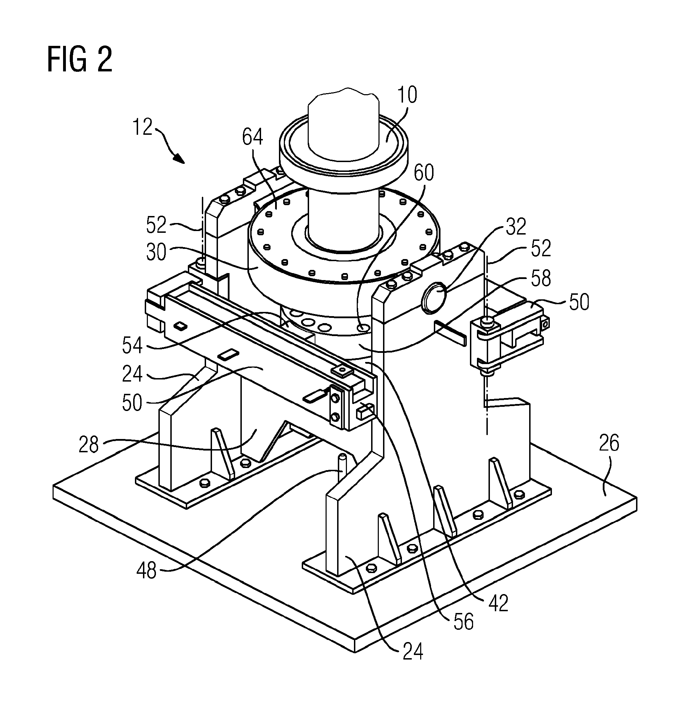

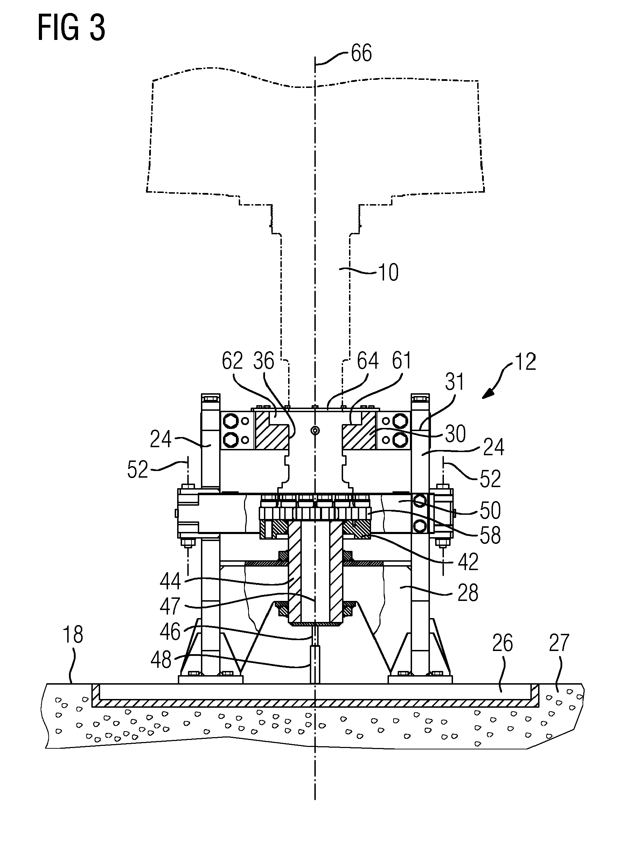

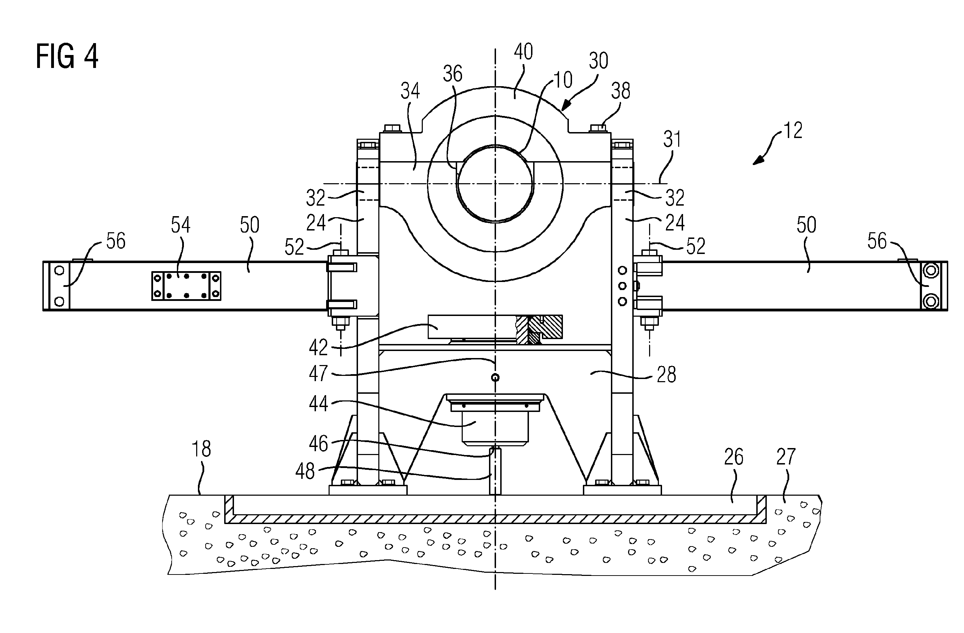

Die einzelnen Bestandteile der Vorrichtung 12 sind in den Figuren 2 bis 4 im Detail gezeigt. Die Vorrichtung 12 umfasst zwei parallel zueinander angeordnete und einander gegenüberliegende Wangenelemente 24, die in der Seitenansicht im Wesentlichen die Kontur eines auf dem Kopf stehenden T aufweisen. Die beiden Wangenelemente 24 sind fest an einer gemeinsamen Bodenplatte 26 befestigt. Die Bodenplatte 26 kann an einem Fundament 27 (FIG 3), welches besonders hohe Kräfte aufnehmen und ins Erdreich ableiten kann, befestigt werden. Die beiden Wangenelemente 24 sind über ein Brückenelement 28 fest miteinander verbunden. Das Brückenelement 28 umfasst zwei parallele C-förmige Platten, die mit den beiden Wangenelementen 24 verschweißt sind. Zwischen den beiden Wangenelementen 24 ist ein Wendering 30 angeordnet. An einander gegenüberliegenden Positionen des Wenderings 30 sind zwei Zapfen 32 befestigt, die in jeweils einem der beiden Wangenelemente 24 um die Schwenkachse 31 drehbar gelagert sind. Die Schwenkachse 31 ist im Wesentlichen parallel zur Horizontalebene 18 angeordnet. Der Wendering 30 ist teilbar ausgestaltet und umfasst aus diesem Grund ein erstes Element 34 (FIG 4) mit einer in der Kontur U-förmigen Öffnung 36 zur Aufnahme und Einlegen des zu schwenkenden Rotors 10. Ein an das erste Element 34 über Schrauben 38 anschraubbares Joch 40 verschließt die offene Seite der Öffnung 36, so dass der Rotor 10 sicher in der Öffnung 36 gehalten werden kann.

Am Brückenelement 28 ist eine zur Horizontalebene 18 senkrecht verfahrbare Scheibe 42 angeordnet. Dazu ist in der Scheibe 42 ein zylindrischer Zapfen 44 eingesteckt (FIG 3) und verschweißt. Der Zapfen 44 ist in einer entsprechenden Führung im Brückenelement 28 entlang einer zur Horizontalebene 18 verlaufenden Senkrechten 47 verschiebbar. Am unteren Ende des Zapfens 44 ist eine Kolbenstange 46 eines Hydraulikzylinders 48 befestigt. Der Hydraulikzylinder 48 stützt sich auf der Bodenplatte 26 ab. Gemäß der in FIG 4 dargestellten Position der Kolbenstange 46 befindet sich die Scheibe 42 in ihrer - auf die Horizontalebene 18 bezogenen - unteren Position.

An jedem der Wangenelemente 24 ist zudem jeweils ein L-förmiger Riegel 50 angelenkt. Beide Riegel 50 sind jeweils um eine zur Horizontalebene senkrechte Achse 52 schwenkbar. Zudem ist an den inneren Seiten des langen Schenkels der Riegel 50 mittig ein Klemmschuh 54 zum Einspannen des Rotors 10 vorgesehen. In FIG 4 sind die Riegel 50 in der geöffneten Position dargestellt. In einer geschlossenen Position sind die ansonsten frei auskragenden Enden 56 der Riegel 50 an dem jeweils anderen Wangenelement 24 verriegelt oder verschraubt (Figuren 2, 3).

In der Scheibe 42 sind eine Vielzahl von Innengewinden angeordnet, mit deren Hilfe ein am verdichterseitigen Ende 11 des Rotors 10 angeordneter Flansch 58 (FIG 1) mit der Scheibe 42 verschraubbar ist.

Um den Rotor 10 in der Vorrichtung 12 abzulegen, ist der Wendering 30 in die in der FIG 4 gezeigte Position zu schwenken. Anschließend ist das Joch 40 des Wenderings 30 durch Lösen der Schrauben 38 zu entfernen, so dass die Öffnung 36 seitlich zugängig ist. Danach kann mit Hilfe eines Krans der Rotor 10 in die Öffnung 36 und auf den in FIG 1 dargestellten Rollenbock 14 abgelegt werden. Dabei wird der Rotor 10 so abgelegt, dass der am verdichterseitigen Ende 11 des Rotors 10 angeordnete Flansch 58 - wie in FIG 1 gezeigt - übersteht. Anschließend wird die Öffnung 36 seitlich verschlossen, indem das Joch 40 an dem ersten Element 34 mit Hilfe der Schrauben 38 sicher befestigt wird. Danach wird mit Hilfe des Krans - wie in FIG 1 gezeigt - der Rotor 10 aus seiner horizontalen Lage 10a in die senkrechte Lage 10c aufgerichtet. Anschließend werden die Riegel 50 aus ihrer geöffneten Position in die geschlossene Position (Figuren 2, 3) geschwenkt. Sonach werden die freien Enden 56 mit dem jeweils anderen Wangenelement 24 fest verbunden. Die an den Riegeln 50 mittig angeordneten Klemmschuhe 54 spannen dann den Flansch 58 des Rotors 10 an zwei einander gegenüberliegenden Punkten ein und sichern so den Rotor 10 gegen Umkippen.

Danach wird mit Hilfe des Hydraulikzylinders 48 und der Kolbenstange 46 sowie des Zapfens 44 die daran angeordnete Scheibe 42 bis an den Flansch 58 herangefahren. Sonach wird die Scheibe 42 um die Senkrechte 47 gedreht, bis deren Gewindeöffnungen mit denen am Flansch 58 angeordneten Öffnungen 60 fluchten. Anschließend kann von oben der Flansch 58 mit der Scheibe 42 verschraubt werden (FIG 3).

Wie aus dem in FIG 3 im Querschnitt dargestellten Wendering 30 ersichtlich, ist dieser - genauer gesagt dessen Öffnung 36 - mit einer Schulter 61 versehen. Ein am Rotor 10 vorgesehener Wellenbund 62 kann dann formschlüssig in der Öffnung 36 an der Schulter 61 anliegen. Auch auf der anderen Seite ist der Wellenbund 62 durch eine am Wendering 30 angeschraubte Abdeckplatte 64 gegen ein Verschieben blockiert. Hierdurch wird eine Bewegung des Rotors 10 in der Öffnung 36 längs der Rotorachse 66 verhindert.

Die Gewichtskraft des Rotors 10 wird über den Wendering 30 und dessen Zapfen 32 in die Wangenelemente 24 und weiter über die Bodenplatte 26 ins Fundament 27 abgeleitet. Eine das Umfallen des Rotors 10 verhindernde Krafteinleitung erfolgt - in Bezug auf die Horizontalebene 18 - unterhalb des Wenderings 30 mit Hilfe zweier Sicherungen. Die erste Sicherung umfasst die an den jeweiligen Wangenelementen 24 angelenkten Riegel 50 und den daran angeordneten Klemmschuhen 54. Das andere Sicherungselement umfasst die an dem Flansch 58 angeschraubte Scheibe 42, welche über den Zapfen 44 mit dem Brückenelement 28 und den Wangenelementen 24 die Querkräfte aufnehmen kann. Aufgrund der doppelten Absicherung des Rotors 10 gegen Umfallen ist die Vorrichtung 12 geeignet, selbst besonders große Lasten ins Fundament 27 und ins Erdreich abzuleiten. Dabei sind derartig große Kräfte ableitbar, wie sie selbst bei Orkanstürmen an im freien aufgestellten Rotoren 10 oder auch bei Erdbeben auftreten.
Dabei ist es unerheblich, ob beim Aufstellen des Rotors 10 zuerst die erste Sicherung mit den Riegeln 50 oder die zweite Sicherung mit der Scheibe 42 aktiviert wird.

Insgesamt betrifft die Erfindung somit eine Vorrichtung 12 zum Schwenken eines Rotors 10 einer Strömungsmaschine aus einer ersten - vorzugsweise horizontalen - Lage 10a in eine zweite - vorzugsweise senkrechte - Lage 10c, wobei der Rotor 10 mehrere Rotorscheiben umfasst, die von mindestens einem Zuganker miteinander verspannt sind, umfassend zwei parallel zueinander angeordnete Wangenelemente 24, ein diese Wangenelemente 24 miteinander verbindendes Brückenelement 28 und einen teilbaren Wendering 30 zur formschlüssigen Aufnahme eines axialen Abschnitts des aufzustellenden Rotors 10 und zwei am Wendering 30 fluchtend angeordnete, in den Wangenelementen 24 drehbar gelagerte Zapfen 32 zum Schwenken des Wenderings 30 um eine zur Horizontalebene parallele Schwenkachse 31. Um eine besonders sichere Befestigung des senkrecht aufgestellten Rotors 10 zu erreichen, die einerseits für kleinere Erdbeben erdbebenfest ist und andererseits auch das Aufstellen des Rotors im Freien ermöglicht und dort den ggf. auftretenden Orkanstürmen gewachsen ist, wird vorgeschlagen, dass im Brückenelement 28 eine zur Horizontalebene 18 senkrecht verfahrbare Scheibe 42 zur flanschartigen Verschraubung mit einem von der Vorrichtung 12 gehaltenen senkrecht aufgestellten Rotor 10 gelagert ist.

## Patentansprüche

1. Vorrichtung (12)
zum Schwenken eines Rotors (10) einer Strömungsmaschine aus einer ersten Lage (10a oder 10c) in eine zweite Lage (10c, bzw. 10a), wobei der Rotor (10) mehrere Rotorscheiben umfasst, die von mindestens einem Zuganker miteinander verspannt sind, umfassend:
- zwei parallel zueinander angeordnete Wangenelemente (24),
- ein diese Wangenelemente (24) miteinander verbindendes Brückenelement (28),
- einen teilbaren Wendering (30) zur formschlüssigen Aufnahme eines axialen Abschnitts des aufzustellenden Rotors (10), und
- zwei am Wendering (30) gegenüberliegend angeordnete, in den Wangenelementen (24) drehbar gelagerte Zapfen (32) zum Schwenken des Wenderings (30) um eine zur Horizontalebene (18) parallele Schwenkachse (31),
wobei im Brückenelement (28) eine zur Horizontalebene (18) senkrecht verfahrbare Scheibe (42) zur flanschartigen Verschraubung mit einem von der Vorrichtung (12) gehaltenen, senkrecht aufgestelltem Rotor (10) gelagert ist.

2. Vorrichtung (12) nach Anspruch 1,
bei der die Scheibe (42) um die Verfahrrichtung schwenkbar ist.

3. Vorrichtung (12) nach Anspruch 1 oder 2,
bei der die Scheibe (42) hydraulisch betätigbar ist.

4. Vorrichtung (12) nach Anspruch 1, 2 oder 3,
bei der der Wendering (30) eine Abdeckplatte (64) aufweist.

5. Vorrichtung (12) nach einem der Ansprüche 1 bis 4,
bei der an jedem Wangenelement (24) jeweils ein Riegel (50) angelenkt ist, welcher an dem jeweils anderen Wangenelement (24) verriegelbar ist.

6. Vorrichtung (12) nach Anspruch 5,
bei der an jedem Riegel (50) ein Klemmschuh (54) zum Einspannen des Rotors (10) vorgesehen ist.

7. Vorrichtung (12) nach einem der Ansprüche 1 bis 6,
bei dem die Wangenelemente (24) unmittelbar oder mittelbar über eine metallische Bodenplatte (26) mit einem Fundament fest verschraubt sind.
